(19) Europäisches Patentamt / European Patent Office / Office européen des brevets

(11) **EP 3 569 398 B1**

(12) **EUROPEAN PATENT SPECIFICATION**

(45) Date of publication and mention of the grant of the patent:
**07.09.2022 Bulletin 2022/36**

(21) Application number: **18898809.1**

(22) Date of filing: **28.09.2018**

(51) International Patent Classification (IPC):
**B30B 15/04** (2006.01)    **B30B 7/04** (2006.01)
**B30B 1/32** (2006.01)

(52) Cooperative Patent Classification (CPC):
**B30B 1/32; B30B 7/04; B30B 15/04; B30B 15/042**

(86) International application number:
**PCT/CN2018/108279**

(87) International publication number:
**WO 2019/134408 (11.07.2019 Gazette 2019/28)**

(54) **HYDRAULIC OIL PRESS**

HYDRAULISCHE ÖLPRESSE

PRESSE À HUILE HYDRAULIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**03.01.2018  CN 201810005642**
**03.01.2018  CN 201820007399 U**
**18.03.2018  CN 201810221695**
**18.03.2018  CN 201820363924 U**
**18.03.2018  CN 201810221701**
**18.03.2018  CN 201820363934 U**
**18.03.2018  CN 201810221706**
**18.03.2018  CN 201820363937 U**

(43) Date of publication of application:
**20.11.2019  Bulletin 2019/47**

(73) Proprietors:
• **Ningbo Dema Intelligent Machinery Co., Ltd.**
  **Zhejiang 315032 (CN)**
• **Dong, Xiangyi**
  **Zhejiang 315032 (CN)**

(72) Inventor: **DONG, Xiangyi**
**Ningbo, Zhejiang 315032 (CN)**

(74) Representative: **Meyer-Dulheuer MD Legal Patentanwälte PartG mbB**
**Franklinstraße 61-63**
**60486 Frankfurt am Main (DE)**

(56) References cited:
| | |
|---|---|
| CN-A- 1 736 625 | CN-A- 107 379 601 |
| CN-A- 108 297 477 | CN-A- 108 312 607 |
| CN-A- 108 327 331 | CN-U- 205 467 521 |
| CN-U- 206 426 490 | DE-A1- 4 441 063 |
| DE-A1- 19 747 658 | DE-A1- 19 953 518 |
| DE-A1-102010 031 100 | DE-B3-102005 048 648 |
| JP-A- 2001 107 911 | JP-U- S56 175 199 |
| US-A- 2 875 652 | US-A- 3 919 878 |
| US-A1- 2003 110 960 | US-A1- 2004 065 137 |

**Description**

CROSS-REFERENCE TO RELATED APPLICATIONS

This application is PCT patent application PCT/CN2018/108279 filed on September 28, 2018, which claims all benefits from China Patent Application Nos. 201810005642.9, filed on January 3, 2018, 201810221695.4, filed on March 18, 2018, 201810221701.6, filed on March 18, 2018, 201810221706.9, filed on March 18, 2018, 201820007399.X, filed on January 3, 2018, 201820363924.1, filed on March 18, 2018, 201820363934.5, filed on March 18, 2018, 201820363937.9, filed on March 18, 2018, in the China National Intellectual Property Administration.

TECHNICAL FIELD

The present disclosure relates to the field of pressure forming technology, and in particular, to an oil hydraulic press.

BACKGROUND

An oil hydraulic press is a molding machine configured for manufacturing industrial products by pressure and widely applied in the engineering field. In the prior art, the oil hydraulic press used in the production cannot flexibly adapt to the demand and the flexibility in the production process. In addition, the oil hydraulic press has a complicated structure and large material consumption, resulting in high cost.

JPS56175199U discloses a vertical presser, which is configured to load a pressing plate subjected to a pressure amount above and below, connect at least three or more pillars of the two pressing plates, and load a cross head and a main driving device between the two pressing plates. Furthermore, the crosshead is liftable and lowerable with the strut as a guide. Wherein a cross-sectional shape of the strut in the platen is a quadrangle; and a frame portion coupled to the upper and lower pressing plates is integrally formed at both ends of the frame portion in the longitudinal direction. The opposite sides of the four surfaces of the strut are arranged so as to be parallel to a straight line passing through the center of the strut and the center of the platen. And the mounting surface as the strut frame portion forms a right angle or a right angle with the straight line passing through the center of the platen. The strut frame portion and the two pressing plates are jointly fastened.

DE102010031100A1 discloses the press which has a direct drive designed as a top or bottom drive and aligned in a press longitudinal direction or in a press transverse direction.

US20040065137A1 discloses a press of pressure cell type and a method for manufacturing a press body part. The press body part comprises a number of plate-shaped lamellar means having the planes of the plates oriented parallel to the planes of the plates of the adjacent lamellar means.

DE19747658A1 discloses a machine tool for the production of three-dimensional sheet metal parts from flat, preferably metallic, semi-finished products through active media forming. There is a multiple cassette system for loading semi-finished products and for removing the finished sheet metal parts. Several shaped sheet metal parts can be manufactured simultaneously by using several tool cassettes and sheet metal holder systems.

JP2001107911A discloses a hydraulic press according to the preamble of claim 1. It relates to a cylinder device constituted of a cylinder part on which a first outflow and inflow part, a second outflow and inflow part and a third outflow and inflow part are formed and which is partitioned into a first cylinder chamber and a second cylinder chamber with the aforementioned third outflow and inflow part as a boundary, a first piston and a second piston, and they are devised to work to retreat in a direction to approach each other by working fluid flowing in the aforementioned first outflow and inflow part and second outflow and inflow part and to advance in a direction to be separated from each other by working fluid flow in the third outflow and inflow part.

DE102005048648B3 discloses a double-head hydraulic press for manufacturing ceramic articles. The dual-hydraulic press consists of a cylinder housing, in which two arranged in the press axis, working in opposite directions and two opposing fixed cross members are present hydraulic piston, wherein the lower mold of the die with the corresponding hydraulic piston and the upper die is coupled with the corresponding cross-member. The cross-members and the cylinder housing are braced together by means of two tie rods and four spacer sleeves are thermally on a solid base frame together. The two molds are controlled independently by a controller.

However, the above documents fail to disclose the distinguishing features in the characterizing part of claim 1.

SUMMARY

It is an object of the present invention to provide an oil hydraulic press that can form a ring-like structure. The oil hydraulic press can be operated in one, two or multiple sets in parallel with less components, reduced material consumption and low manufacturing cost. This problem is solved by an oil hydraulic press according to claim 1. Further advantageous embodiments are the subject-matter of the dependent claims.

The present disclosure provides an oil hydraulic press including a support frame, at least one main cylinder assembly and at least two fixed die tables. The at least one main cylinder assembly and the at least two fixed die tables are disposed in the support frame. A pressing mechanism is formed between the at least one main cylinder assembly and the each of at least two fixed die tables. The support frame is in an annular or ring-like shape and is configured for fixing the at least one main cylinder assembly and the at least two fixed die tables.

The support frame comprises two sets of end frames; the cylinder body is located between the two sets of end frames. Each of the two sets of end frames comprises two first buckle frames, wherein the two first buckle frames are symmetrically arranged around moving shafts of the two pistons. One end of each of the two first buckle frames carries the cylinder body, the other end of each of the two first buckle frames carries one of the at least two fixed die tables. Each of the two first buckle frames comprises a main segment and a bending segment, the main segment and the bending segment are curved or curve-like, and the curvature of the main segment is smaller than that of the bending segment. One end of the main segment is connected with the cylinder body, and the other end of the main segment is connected with one end of the bending segment. The bending segments of the two first buckle frames are interconnected and form a connection surface at the joint. The one end of the main segment connected to the cylinder body is provided with a groove, and the corresponding cylinder body is provided with a protrusion that cooperates with the groove. Ends of the two first buckle frames forming the connection surface are provided with pin holes, which are coupled to pins. Each of the two sets of end frames, the cylinder body and each of the at least two fixed die tables form a closed structure, such that two closed structures are formed on both sides of the cylinder body.

The oil hydraulic press can include a plurality of main cylinder assemblies, which can be coaxially arranged in a line along a telescopic direction of the piston. Each of the plurality of main cylinder assemblies can include two pistons respectively disposed on two ends of the cylinder body. The two pistons can be arranged coaxially and move in opposite directions, the support frame further can include at least one set of intermediate frames, and each of the at least one set of intermediate frames can include two second buckle frames, the two second buckle frames can be symmetrically arranged around the moving shaft of the piston, and two ends of each of the two second buckle frames can be respectively connected to two adjacent cylinder bodies. The oil hydraulic press can further include a plurality of fixed die tables, two fixed die tables connecting with one of the at least one set of intermediate frames can be disposed opposite to each other and between two adjacent main cylinder assemblies, and the plurality of main cylinder assemblies can cooperate with the plurality of fixed die tables, resulting in forming a plurality of pressing mechanisms which can be mutually coaxial.

The oil hydraulic press can include a main cylinder assembly, the main cylinder assembly can include two pistons which are respectively disposed on two ends of the cylinder body and mutually coaxial and move in opposite directions, and the oil hydraulic press can further include two fixed die tables, the two fixed die tables are respectively fixed on two sides of the main cylinder assembly by the two sets of end frames, resulting in forming two pressing mechanisms which are mutually coaxial.

The following embodiment does not form part of the claimed invention, the two first buckle frames on the same end of the support frame can be integrally formed as a buckle frame component, thereby obtaining two buckle frame components for two sets of end frames, and the two buckle frame components can be interlocked to form the support frame. The main cylinder assembly and the two fixed die tables can be disposed in an inner ring of the support frame, and the moving shaft of the two pistons can coincide with a long axis of the support frame, the two buckle frame components can be symmetrically arranged around the axis of the moving shaft of the two pistons, and the oil hydraulic press can further include a binding layer surrounding an outer surface of an outer ring of the support frame in order to pre-tighten the support frame.

The following embodiment does not form part of the claimed invention, in which the binding layer surrounding the outer surface of the outer ring of the support frame applies a pre-tightening force, in a preloading state:

$$\sigma_{1f} A_f = \eta F/2,$$

wherein, $\sigma_{1f}$ is an average compressive stress in a cross section of the buckle frame component, $A_f$ is a cross-sectional area of the buckle frame component, $F$ is a nominal pressure of the oil hydraulic press, $\eta$ is a pre-pressure coefficient, and the pre-pressure coefficient $\eta$ is more than or equal to 0.1 and less than or equal to 0.9.

If the average compressive stress in the cross section of the buckle frame component is equal to an allowable compressive stress of $[\sigma]$, a minimum value of the cross-sectional area of the buckle frame component $A_f$ is: $A_f = \eta F/2[\sigma]$.

The following embodiment does not form part of the claimed invention, in which the buckle frame component can include a main portion and two bending portions respectively and symmetrically connected with two ends of the main portions, and the two bending portions in the buckle frame component can be connected with each other.

The following embodiment does not form part of the claimed invention, in which a connecting surface can be formed between the two buckle frame components and an angle between the long axis of the support frame and an average normal line of the connecting surface can be in a range of 10 degrees to 90 degrees.

The following embodiment does not form part of the claimed invention, in which the angle between the long axis of the support frame and the average normal line of the connecting surface can be about 90 degrees.

The following embodiment does not form part of the claimed invention, in which two connecting surfaces can be formed between the two buckle frame components, and the two connecting surfaces can be parallel to each other or symmetrically arranged around a short axis of the support frame.

The following embodiment does not form part of the claimed invention, in which a transition layer can be further disposed between the support frame and the binding layer, the transition layer can be circumferentially wrapped around or located on the outer surface of the support frame, and a circumferential outer surface of the transition layer can have a continuous smooth transition structure that protrudes outward from the support frame.

The following embodiment does not form part of the claimed invention, in which the transition layer can include a first transition layer and a second transition layer, the first transition layer can have a ring-shaped structure and the second transition layer can be attached on the first transition layer.

The following embodiment does not form part of the claimed invention, in which the first transition layer can have a uniform thickness and the second transition layer can have a thickness that gradually varies along a circumferential direction.

The following embodiment does not form part of the claimed invention, in which the second transition layer can have a ring-like structure and a longitudinal section of the outer wall of the second transition layer can have a regular shape.

The main cylinder assembly and the fixed die table can be fixed by the support frame, which forms a ring-like structure, can be operated in one, two or multiple sets in parallel, and can realize pressing manufacturing. The oil hydraulic press has less components, reduced material consumption and low manufacturing cost.

BRIEF DESCRIPTION OF THE DRAWINGS

FIG. 1 is a cross-sectional view of an oil hydraulic press in a first embodiment of the present disclosure.
FIG. 2 is a cross-sectional view of the oil hydraulic press in FIG. 1, which is in a working state.
FIG. 3 is a cross-sectional view of an oil hydraulic press in a second embodiment of the present disclosure.
FIG. 4 is a cross-sectional view of the oil hydraulic press in FIG. 3, which is in a working state.
FIG. 5 is a cross-sectional view showing a support frame of an oil hydraulic press in prior art, which is under a force in a working state.
FIG. 6 is a cross-sectional view showing a force on a support frame of an oil hydraulic press, which is under a force in a preloading state, the embodiment concerned does not form part of the claimed invention.
FIG. 7 is a cross-sectional view showing a force on a support frame of an oil hydraulic press, which is under a force in a working state, the embodiment concerned does not form part of the claimed invention.
FIG. 8 is a cross-sectional view of a support frame of an oil hydraulic press in a third embodiment of the present disclosure, the embodiment concerned does not form part of the claimed invention.
FIG. 9 is a cross-sectional view of the support frame of the oil hydraulic press in FIG. 8, which is in a buckled state.
FIG. 10 is a cross-sectional view of the support frame in FIG. 8.
FIG. 11 is a cross-sectional view showing connecting surface in an embodiment of the present disclosure, the embodiment concerned does not form part of the claimed invention.
FIG. 12 is a cross-sectional view showing connecting surface in another embodiment of the present disclosure, the embodiment concerned does not form part of the claimed invention.
FIG. 13 is a cross-sectional view of a part of a support frame of an oil hydraulic press in a fourth embodiment of the present disclosure, the embodiment concerned does not form part of the claimed invention.
FIG. 14 is a cross-sectional view of a first transition layer of the present disclosure; the embodiment concerned does not form part of the claimed invention.
FIG. 15 is an enlarged view of a part of the first transition layer in FIG. 14.
FIG. 16 is a cross-sectional view of a second transition layer of the present disclosure; the embodiment concerned does not form part of the claimed invention.
FIG. 17 is an enlarged view of a part of the second transition layer in FIG. 16.

In the drawing, 100 is an oil hydraulic press, 10 is a support frame, 11 is an end frame, 111 is a first buckle frame, 12 is an intermediate frame, 121 is a second buckle frame, 13 is a buckle frame component, 131 is a main segment, 132 is a bending segment, 133 is a first connecting surface, 134 is a second connecting surface, 14 is a binding layer, 15 is a support base, 16 is a transition layer, 161 is a first transition layer, 162 is a second transition layer, 163 is a supporting layer, 17 is a concave groove, 20 is a main cylinder assembly, 21 is a cylinder body, 22 is a piston, and 30 is a fixed die set.

DETAILED DESCRIPTION

The present disclosure will be further described in detail below with reference to the drawings and specific embodiments, in order to better understand the objective, the technical solution and the advantage of the present disclosure. It should be understood that the specific embodiments described herein are merely illustrative and are not intended to limit the scope of the disclosure.

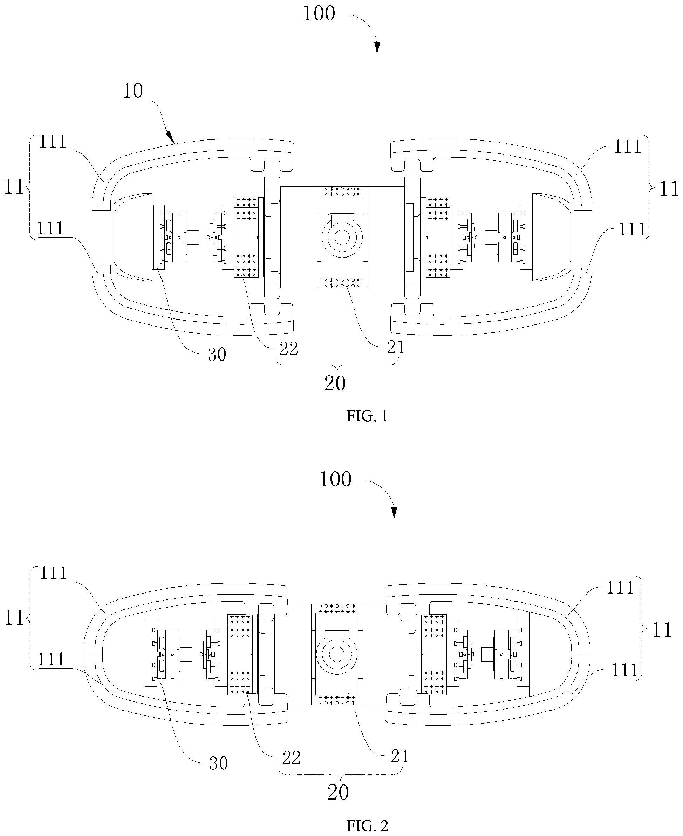

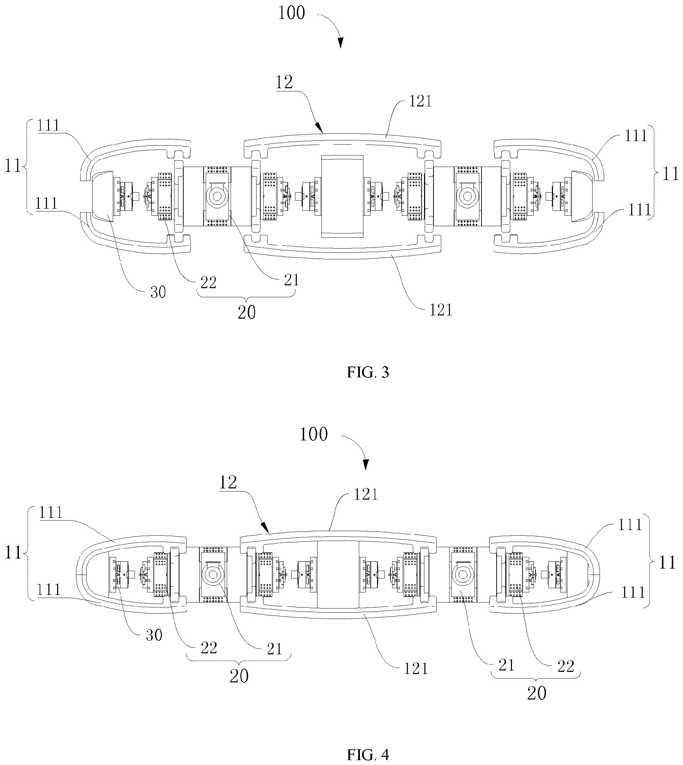

Referring to FIGs. 1 to 4, FIG. 1 is a cross-sectional view of an oil hydraulic press 100 in a first embodiment of the present disclosure. FIG. 2 is a cross-sectional view of the oil hydraulic press 100 in FIG. 1, which is in a working state. FIG. 3 is a cross-sectional view of an oil hydraulic press 100 in a second embodiment of the present disclosure. FIG. 4 is a cross-sectional view of the oil hydraulic press 100 in FIG. 3, which is in a working state.

The oil hydraulic press 100 includes a support frame 10, at least one main cylinder assembly 20 and at least one fixed die table 30. The main cylinder assembly 20 and the fixed die table 30 can be disposed on the support frame 10 and opposite to each other.

The support frame 10 is configured for supporting the main cylinder assembly 20 and the fixed die table 30. The main cylinder assembly 20 can serve as a power source for the oil hydraulic press 100 for providing a pressure for pressure molding. The fixed die table 30 is configured for placing a product to be stamped. The main cylinder assembly 20 can move toward the fixed die table 30 and take a stamping action, thereby manufacturing a stamped product on the fixed die table 30 by the pressure molding.

In detail, the main cylinder assembly 20 can include a cylinder body 21 and a piston 22. The support frame 10 can include at least one set of end frame 11. The at least one set of end frame 11 is composed of two first buckle frame 111, which are symmetrically arranged around a moving shaft of the piston 22. The first buckle frame 111 is in a ring-like shape with at least one gap or a half-moon shape. The cylinder body 21 is connected to one end of the buckle frame 111. The fixed die table 30 is connected to the other end of the first buckle frame 111 or a position close to the other end of the first buckle frame 111. The first buckle frame 111 fixes the cylinder body 21 and the fixed die table 30 in order to form a pressing mechanism between the piston 22 and the fixed die table 30.

In detail, the piston 22 can move toward the fixed die table 30 to finish the stamping action. The two first buckle frames 111 are symmetrically or substantially symmetrically arranged around the moving shaft of the piston for ensuring a force balance of the piston 22 and the stability of the support frame 10 during a pressing process. The first buckle frame 111 can be ring-like in shape with gaps or a half-moon shape. Preferably, the first buckle frame 111 has a curved surface that changes smoothly in curvature. The stability of the support structure is optimized because the two first buckle frames 111 are symmetrically connected with the cylinder body 21 and the fixed die table 30. In addition, when the oil hydraulic press 100 is in a working state, due to similarity or symmetry of the two first buckle frames 111, the two first buckle frames 111 will have the same or very close deformation, resulting in simplifying a connection mechanism design and increasing safety. One end of the first buckle frame 111 is connected to the cylinder body 21, and the other end of the first buckle frame 111 is connected to the fixed die table 30 to stably support the main cylinder assembly 20 and the fixed die table 30. When the piston 22 moves toward the fixed die table 30, the support frame 10 can play a role of supporting.

The number of the main cylinder assembly 20 and the fixed die table 30 in the present disclosure can be implemented in various combinations according to requirements.

For example, the number of the main cylinder assembly 20 and the fixed die table 30 can be one. At this time, the main cylinder assembly 20 includes one cylinder body 21 and one piston 22, which are supported and fixed by a set of end frame including two first buckle frames 111 to form one pressing mechanism. When the piston 22 is stamped, there will be a reaction force in order to improve efficient use and rationality of a stamping power.

In the first embodiment, the main cylinder assembly 20 is composed of one cylinder and two pistons 22. The two pistons 22 are respectively disposed at both ends of the cylinder body 21, and the two pistons 22 are coaxial and move in opposite directions. Two fixed die tables 30 are provided to cooperate with the two pistons 22 to form two coaxial pressing mechanisms. At this time, the main cylinder assembly 20 and the fixed die tables 30 are supported by two sets of end frames 11. Referring to FIG. 1, it is ensured that the two pressing mechanisms are stable and the structure of the support frame can be reduced as much as possible, resulting in the materials being reduced. At the same time, the two sets of end frames 11 can make the main cylinder assembly 20 and the two fixed tables 30 connected to form two closed structural frames, ensuring support stability.

In the second embodiment, the number of the main cylinder assemblies 20 is at least two. The two main cylinder assemblies 20 are coaxially arranged in a line along a telescopic direction of the piston 22. The number of the pistons 22 of each main cylinder assembly 20 is two. The two pistons 22 are disposed on both ends of the main cylinder assembly 20 and move coaxially in opposite directions. The number of the fixed die tables 30 is multiple. The support frame 10 includes two sets of end frames 11 and a plurality of sets of intermediate frames 12. The intermediate frame 12 is composed of two second buckle frames 121 symmetrically arranged around the moving shaft of the piston. The second buckle frame 121 has a curved shape or a curve-like shape, and two ends of the second buckle frame 121 are respectively connected to the cylinder bodies 21 of the two main cylinder assemblies 20, which are adjacent to the second buckle frame 121. Two fixed die tables 30 back to back are provided between the two adjacent main cylinder assemblies 20 and connected to the intermediate frame 12. The support frame 10 makes the main cylinder assembly 20 and the fixed die table 30 fixed, resulting in forming a plurality of coaxial pressing mechanisms. The intermediate frame 12 is configured for connecting the adjacent two main cylinder assemblies 20 to each other. Two fixed die tables 30 are disposed between two adjacent main cylinder assemblies 20 to realize the pistons 22 to form a pressing mechanism thereof. In order to fix the fixed die tables 30, the two fixed tables 30 is back-to-back and fixedly connected with the second buckle frames 121. The end frame 11 and the intermediate frame 12 respectively support different structures, resulting in forming a plurality of coaxial pressing mechanisms to meet various pressing requirements.

In order to facilitate the connection of the first buckle frame 111 and the cylinder body 21 and simplify the structure, one end of the first buckle frame 111 connected to the cylinder body 21 is provided with a groove, and the cylinder body 21 is provided with a protrusion coupled to the groove. Central axes of the protrusion and the groove are perpendicular to the moving shaft of the piston. When the piston 22 is punched, a reaction force is coaxial with the piston 22, so that the central axes of the protrusion and the groove perpendicular to the piston moving shaft can ensure that the cylinder body 21 will not move in the moving shaft of the piston. When the oil hydraulic press 100 is in operation, there is no external force in the axes of the protrusion and the groove, so that the protrusion is not separated from the groove, so that the function of fixing the cylinder body 21 can be realized and at the same time the structure is simplified. The first buckle frame 111 is connected with the fixed die table 30 by another groove and another protrusion in the same method (not shown). Preferably, an end of the first buckle frame 111 connected to the fixed die table 30 is located outside the fixed die table 30 in the punching direction of the piston 22. The end of the first buckle frame 111 connected to the fixed die table 30 is configured for limiting the displacement of the fixed die table 30 in a direction of the moving shaft of the piston 22. When the piston 22 is punched, the end of the first buckle frame 111 is located outside the fixed die table 30, that is, a distance between the end of the first buckle frame 111 and the piston 22 is greater than a distance between the fixed die table 30 and the piston 22, such that the end of the first buckle frame 111 can bear against the fixed die table 30 and provide a support for the fixed die table 30, resulting in the end frame 11 forming a support structure. In the same way, the second buckle frame 121 is also provided with another groove for engaging with another protrusion of the cylinder body 21. Since the second buckle frame 121 is only connected to the cylinder body 21, another groove is provided at both ends thereof to stably support the cylinder body 21.

The connection between the end frame 11 and the fixed die table 30 is stable, which ensures the stability in a punching or stamping process. In a preferable embodiment, ends of the two first buckle frames 111 of the end frame 11 away from the cylinder body 2 are connected to each other 1, and a connecting surface is formed at a joint of the ends of the two first buckle frames 111. An angle between the moving shaft of the piston and an average normal line of the connecting surface is in a range of 10 degrees to 90 degrees. First ends of the two first buckle frames 111 are connected to the cylinder body 21, and the second ends is required to connect to the fixed die table 30. The second ends of the two first buckle frames 111 are in contact connection, forming a connection surface at the joint of the two first buckle frames 111. The fixed die table 30 and the two first buckle frame 111 are engaged with each other. When punching, the first buckle frame 111 has sufficient strength to ensure the support. The connecting surface can be a flat surface, a segmented continuous curved surface or a smooth curved surface. The connecting surface can have a normal line perpendicular to the connecting surface. An average normal line is regarded as the neutralization of the connecting surface. For example, when the connecting surface is an arc surface, a smooth surface, or a step surface, the average normal is regarded as the neutralization. Preferably, the connecting surface is flat, the angle between the moving shaft of the piston and the average normal line of the connecting surface is about 90 degrees. The joints of the two first buckle frames 111 form a connecting surface coplanar with the moving shaft of the piston, which can further enhance the support of the fixed die table 30 and optimize the structure.

The second ends of the two first buckle frames 111 connected to each other are provided with pin holes, which are coupled to pins, resulting in restricting a displacement of the two first buckle frames 111 in a direction along the moving shaft of the piston. Due to the force of the first buckle frames 111 in a direction perpendicular to the moving shaft of the piston is minor, the first buckle frames 111 can be restricted by the pin, ensuring that the two first buckle frames 111 are not separated from each other, such that the structure is simplified and it is easy to assemble and convenient to operate. The connecting surface of the two first buckle frames 111 also has a certain frictional force in the closed state, so that the requirement for connection component or mechanism (or design difficulty) is much lower (or much easier) than that in the transmission technology. The structure of the first buckle frames 111 is related to the performance of the support structure. Preferably, the first buckle frame 111 includes a main segment and a bending segment, and the main segment and the bending segment are curved or curve-like, and a curvature of the main segment is smaller than that of the bending segment. One end of the main segment is connected with the cylinder body 21, the other end of the main segment is connected with one end of the bending segment, and the bending segments of the two first buckle frames 111 are connected to each other. The main segment and the bending segment can be an integrated structure.

In the present disclosure, the support frame 10 is configured for supporting, which can meet the requirement of the structural support, the material consumption is reduced, and the structure is simplified. In order to further reduce the material consumption, at least part of the support frame 10 can be hollow. On the basis of meeting the connection and the rigid support requirements, the end frame 11 and the intermediate frame 12 can be arranged in a hollow shape, reducing the material consumption and the weight of the support frame and optimizing the structure.

The support frame 10 of the present disclosure can fix both the main cylinder assembly and the fixed die table, forming a closed structural frame. The main cylinder assemblies and the fixed die tables can be arranged in a single group, two groups or multiple groups, which can realize pressing, reduce material consumption, weight and manufacturing costs compared with the transmission structure.

The bending segment of the end frame 11 of the present disclosure can withstand a considerable part of the working load, and a surface of the bending segment also has a certain frictional force in the closed state, so that the connection member, the mechanism requirement, or the design difficulty will be much less than the transmission technology, and it is easier to achieve structural production and manufacturing.

The end frame 11 and the intermediate frame 12 of the present disclosure are all symmetrically arranged. Due to the similarity/symmetry of the main components, they have the same deformation or close deformation when withstanding the working load, which is beneficial to the overall work of the structure and the performance is stable. The force of the support frame 10 is mainly along the moving direction of the piston, and there is almost no external force tending to separate the end frames 11 on the connecting surface, so the two end frames 11 are not with large connection stiffness as the conventional support frame. It substantially simplifies the connection mechanism design and increases safety. The oil hydraulic press 100 in the present disclosure has s reasonable structure, reduces production cost, saves resources, has strong practicability, and is suitable for application.

Referring to FIG. 1 and FIG. 2, in the first embodiment of the present disclosure, the oil hydraulic press 100 includes a support frame 10, a main cylinder assembly 20, and two fixed die tables 30. The main cylinder assembly 20 includes two pistons 22, which are respectively disposed at two ends of the cylinder body 21. The two pistons 22 are coaxial and mutually move in opposite directions. The two fixed die tables 30 are respectively disposed on two sides of the main cylinder assembly 20, and the support frame 10 includes two sets of end frames 11, which are configured for fixing the two fixed die tables 30 on both sides of the main cylinder assembly 20 respectively and forming two coaxial pressing mechanisms.

In detail, each set of end frames 11 is composed of two first buckle frames 111, which are symmetrically arranged around the moving shaft of the piston. The first buckle frame 111 includes the main segment and the bending segment, which are curved or curve-like, and the curvature of the main segment is smaller than that of the bending segment. One end of the main segment is connected with the cylinder body 21, and the other end of the main segment is connected with one end of the bending segment. The bending segments of the two first buckle frames 111 are interconnected and form a connecting surface at the joint, the connecting surface can be coplanar with the moving shaft of the piston. The end of the main segment connected to the cylinder body 21 is provided with a groove, and the corresponding cylinder body 21 is provided with a protrusion that cooperates with the groove. There are four first buckle frames 111 for the two sets of end frames 11, and the cylinder body 21 is provided with four protrusions, which are arranged at two ends of the cylinder body 21. The ends of the two first buckle frames 111 forming the connection surface are provided with pin holes, which are coupled to pins, resulting in restricting the displacement of the two first buckle frames 111 in a direction along the moving shaft of the piston.

Each set of end frame 11, the cylinder body 21, and the fixed die table 30 can form a closed structure, such that two closed structures can be formed on both sides of the cylinder body 21. Each closed structure includes a pressing mechanism, such that two pressing mechanisms in total can be formed. The pistons 22 of the two pressing mechanisms can synchronously move in opposite directions, and two sets of stamping work with the same pressure can be completed at the same time.

Referring to FIG. 3 and FIG. 4, in the second embodiment of the present disclosure, the oil hydraulic press 100 includes a support frame 10, two main cylinder assemblies 20, and four fixed die tables 30. The two main cylinder assemblies 20 are arranged in a line, and two pistons 22 of the main cylinder assembly 20 are respectively disposed at the two ends of the cylinder body 21 and coaxial and mutually move in opposite directions, so that the moving shafts of the pistons of the two main cylinder assemblies 20 are coaxial. There are four fixed die tables 30, which are two separate fixed die tables 30 and two fixed die tables 30 disposed back to back. The support frame 10 includes two sets of end frames 11 and a set of intermediate frames 12.

In detail, the end frame 11 is composed of two first buckle frames 111. The two first buckle frames 111 are symmetrically distributed symmetrically about the axis of movement of the piston. The first buckle frame 111 includes a main segment and a bending segment. The main segment and the bending segment are curved or curve-like, and the curvature of the main segment is smaller than that of the bending segment. One end of the main segment is connected with the cylinder body 21, and the other end of the main segment is connected with one end of the bending segment. The bending segments of the two first buckle frames 111 are connected to each other and form a connecting surface at the joint, which is coplanar with the moving shaft of the piston.

The intermediate frame 12 is composed of two second buckle frames 121 symmetrically arranged around the moving shaft of the piston. The second buckle frame 121 has a curved shape or a curve-like shape, and two ends of the second buckle frame 121 are respectively connected to the cylinder bodies 21 of the two main cylinder assemblies 20. Two fixed die tables 30 back to back are provided between the two adjacent main cylinder assemblies 20 and connected to the second buckle frame 121.

The ends of the first buckle frame 111 and the second buckle frame 121 connected with the cylinder body 21 are provided the groove, and the cylinder body 21 is correspondingly provided with the protrusion that cooperates with the groove. The two sets of end frames 11 include four first buckle frames 111 in total. A set of intermediate frames 12 includes two second buckle frames 121 in total. Since both ends of the second buckle frame 121 are connected with the cylinder body 21, each main cylinder assembly 20 is provided with four protrusions. In the first buckle frame 111, the bending segment forming the connection surface is provided with pin holes, which are coupled to pins, resulting in restricting a displacement of the two first buckle frames 111 in a direction along the moving shaft of the piston. After the installation is completed, the end frames at both ends cooperate with the cylinder body 21 and the two separate fixed die tables 30 to form two pressing mechanisms, and the intermediate frame 12 cooperate with the cylinder body 21 and the two fixed die tables 30 back to back to form two pressing mechanisms. That is, four closed structural frames can form four pressing mechanisms in total. Since the pistons 22 of the main cylinder assemblies 20 are coaxial, the formed four pressing mechanisms are coaxial.

It can be understood that when the intermediate frames 12 are omitted, the two first buckle frames 111 located above or below may be integrated, that is, the two first buckle frames 111 can be symmetrically arranged around the moving shaft of the piston (that is, the long axis of the support frame in an ellipse shape).

The support frame 10 of the present disclosure can fix both the main cylinder assemblies 20 and the fixed die tables 30, forming a closed structural frame. The main cylinder assemblies and the fixed die tables can be arranged in a single group, two groups or multiple groups, which can realize pressing, reduce material consumption, weight and manufacturing costs compared with the transmission structure.

The support frame 10 needs to support the main cylinder assembly 20 and the fixed die table 30 and withstand a back pressure from the main cylinder assembly 20 and the fixed die table 30 during operation. In the conventional hydraulic press, a steel wire or steel strip winding on the external surface is often used to enhance the safety of the support frame 10. However, in the conventional design, the steel wire or the steel strip usually give a pre-tightening force exceeding a nominal force, the support frame 10 is always under pressure, and the tensile performance of the support frame 10 cannot be fully utilized, which seriously wastes the material and in some extent, the safety and reliability of the whole machine is reduced. In addition, the winding steel wire often slips due to insufficient friction. Simply increasing a sliding limit device will inevitably increase a working tension of the steel wire and the risk of fracture will be higher. Furthermore, the support frame 10 will unevenly apply the pressure, it is hard to utilize and make full use of the overall mechanical properties of the support frame 10.

The oil hydraulic press 100 provided by the present disclosure adopts a bundling connection mechanism, reasonably design the pre-stress of the bundling layer on the support frame 10, fully balance the stress state of the base material and the bundling material, and exert the characteristics that the material can simultaneously withstand the tension and the pressure, so that the number of components of the support frame 10 is significantly reduced. On the basis of meeting the support requirements, the material consumption and cost can be minimized, and the safety performance of the whole machine is substantially improved.

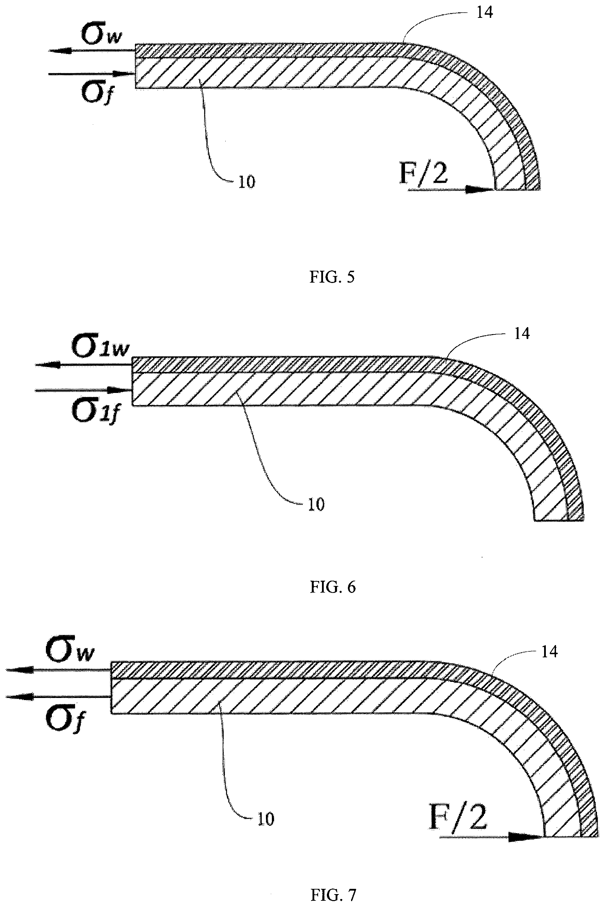

The following embodiment does not form part of the claimed invention. Referring to FIG. 5 to FIG. 7, FIG. 5 shows a support frame of an oil hydraulic press in prior art, which is under a force in a working state. FIG. 6 shows a cross-sectional view showing a force on a support frame of an oil hydraulic press in the present disclosure, which is under a force in a preloading state. FIG. 7 shows a cross-sectional view showing a force on a support frame of an oil hydraulic press in the present disclosure, which is under a force in a working state.

Referring to FIG. 5, in the conventional bundling technique, the support frame 10 in the prior art is generally locked together by the binding layer 14 (usually binding steel wires and belts). The force on support frame 10 satisfies the following formula:

$$\sigma_w A_w = \sigma_f A_f = \eta F/2$$

Wherein, $\sigma_w$ and of are an average tensile stress and compressive stress on a cross-section of the binding layer 14 and the support frame 10, respectively. $A_w$ and $A_f$ represent a cross-sectional area of the binding layer 14 and the support frame 10, respectively. F is a nominal pressure of the oil hydraulic press, and $\eta$ is a pressure coefficient. The binding force is generally greater than the nominal pressure, that is, the pressure coefficient $\eta$ is greater than 1. The support frame 10 is still under pressure if the oil hydraulic press is in the working state. As a result, the strong support frame 10 only plays a role of an entangled plate and always bears the compressive stress, its huge tensile property does not come into play. Correspondingly, the binding layer 14 undergoes a tensile force exceeding the nominal force under the pre-stressing state, and in the working state, it additionally undergoes a tension caused by the pressing force. That is, only the material of the binding layer 14 really bears all the working loads and does the positive work. So the structural performance of the binding layer 14 is required much higher, and at the same time, the structure of the support frame 10 does not exhibit its tensile property.

The following embodiment does not form part of the claimed invention. Referring to FIG. 7, the oil hydraulic press 100 in the present disclosure has a resultant force acting on the cross section of the support frame in the preloading state and the resultant force is zero, that is explained as following:

$$\sigma_{1w}A_w = \sigma_{1f}A_f = \eta F/2 \qquad\qquad (1)$$

$\sigma_{1w}$ and $\sigma_{1f}$ are the average tensile stress and compressive stress acting on the binding layer and the cross section of the base member, respectively. $A_w$ and $A_f$ represent the sectional area of the binding layer 14 and the base member. F is the nominal pressure of the oil hydraulic press 100. $\eta$ is a pressure coefficient or a pre-pressure coefficient. When the oil hydraulic press 100 is in operation, the support frame 10 will be in a tensile state and undergo the stress, and the total stress of the binding layer 14 and the base member is:

$$\sigma_w = \sigma_{1w} + \sigma_{2w}$$

$$\sigma_f = \sigma_{2f} - \sigma_{1f}$$

$0.1 \leq \eta \leq 0.9$, if it is replaced by relevant design parameters, will be as following:

$$\sigma_{1f}A_f = \eta F/2$$

$\sigma_{1f}$ is equal to an allowable compressive stress of $[\sigma]$, and a minimum value $A_f$ of the cross-sectional area of the buckle frame component 13 is:

$$A_f = \eta F/2[\sigma] \qquad\qquad (2)$$

It should be noted that in the conventional technology, the pressure coefficient $\eta$ is required to be greater than 1, $\eta$ is usually equal to 1.2. In the present disclosure, the formulas (1) and (2) shows that the cross-sectional area $A_f$ of the support frame in the present disclosure can be reduced by several times compared with that of the conventional support frame. The structure of the oil hydraulic press of the present disclosure can effectively reduce the use of materials, and the support frame 10 can be used as a tensile member during the operation of the oil hydraulic press, thereby reducing the pre-stress of the binding layer 14 and structural stress and simplifying its structure.

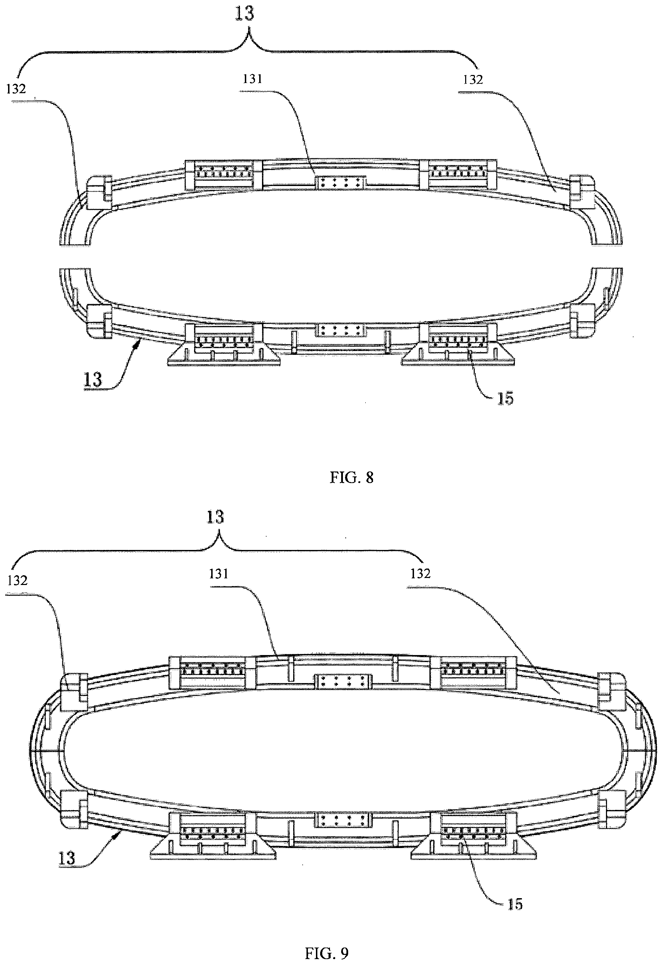

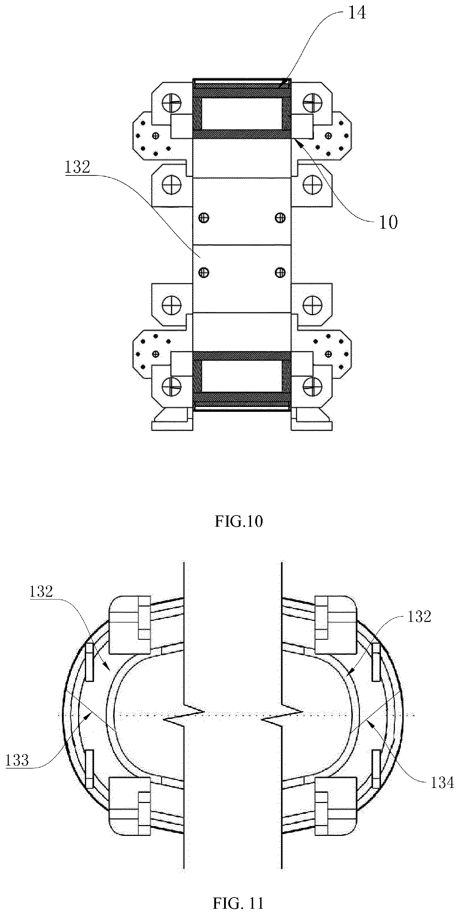

The following embodiments do not form part of the claimed invention Referring to FIG. 8 to FIG. 10, FIG. 8 shows a cross-sectional view of a support frame of an oil hydraulic press in a third embodiment of the present disclosure. FIG. 9 shows a cross-sectional view of the support frame of the oil hydraulic press in FIG. 8, which is in a buckled state. FIG. 10 shows a cross-sectional view of the support frame in FIG. 8. The support frame 10 has a ring structure or a ring-like structure including an outer ring, an inner ring, and a hollow in the inner ring. The main cylinder assembly 20 and the fixed die table 30 can be installed in the inner ring.

Preferably, the outer ring of the support frame 10 is in an elliptical shape. Furthermore, the longitudinal section of the support frame 10 is in an olive-like shape with a thickness. The outer shape of the support frame 10 has an olive shape, that is, the support frame 10 has an olive-shaped appearance. The olive-shaped support frame can provide a pre-stress of a curved support and has a stronger structural stability. At the same time, the inner ring can maximize the space for compression equipment, reducing the weight of the equipment and the use of materials when the equipment requirements are met.

The following embodiment does not form part of the claimed invention. In this embodiment the intermediate frame 12 can be directly omitted, and the two first buckle frames 111 on the same side of the two end frames 11 can be integrally formed to a buckle frame component 13. The two buckle frame components 13 can be symmetrically or substantially symmetrically arranged around the long axis is symmetrically arranged of the support frame, and the connecting surface formed at the joint of the two buckle frame components 13 can be a flat surface, a segmented and continuous curved surface, or a smooth curved surface. Preferably, the connecting surface is a flat surface.

The angle between the connecting face of the two buckle frame components 13 and the long axis of the support frame 10 is 0°, that is, coplanar.

When the oil hydraulic press 100 is operated telescopically along the long axis, and both ends of the long axis of the support frame 10 undergo a tensile force. Therefore, a bending portion at the joint of the two buckle frame components 13 is mainly pressed. The two buckle frame components 13 are fastened along the long axis. If the two buckle frame components 13 are not subjected to a separating force, that is, a force along the short axis, and they only needs to be fixed along the long axis. Compared with the conventional structure, under the condition of satisfying the pressure, such structure is less stressed and its design is more reasonable.

The following embodiment does not form part of the claimed invention. In this embodiment, each of the buckle frame components 13 includes a main segment 131 and two bending segments 132. The two bending segments 132 are symmetrically connected at two ends of the main segment 131. When the two buckle frame components 13 are fastened together, the bending segments 132 of the two buckle frame components 13 are connected to each other, and a connecting surface is formed at the joint of the bending segments 132. Preferably, the connecting surface can be a plane, which is coplanar with the long axis.

The main cylinder assembly 20 and the fixed die table 30 which provide a forming pressure in the oil hydraulic press 100 are disposed in the inner ring of the support frame 10. An extension and contraction direction of the oil hydraulic press 100 coincides with its long axis, and the angle between the connecting surface and the long axis is 0 degree. The two buckle frame components 13 are combined to form a closed structural frame. The binding layer 14 will combine the buckle frame components 13 and provide pressure to form the closed structural frame. When the oil hydraulic press 100 is in operation, the oil hydraulic press 100 will extend or contract along the long axis. The bending segments 132 at both ends of the buckle frame component 13 are located at both ends of the long axis and undergo a considerable part of the working load. The support frame 10 mainly undergoes a force along a moving direction of a cylinder column. There is almost no external force tending to separate them the two buckle frame components 13 on the connecting surface, which reduces the requirements for interconnecting the bending segments 132. The main segment 131 and the bending segment 132 can be connected by a connecting component, which includes a spacer block or a screw. The main segment 131 and the bending segment 132 can be provided with screw holes. To further improve the rigidity of the buckle frame component 13, the main segment 131 and the two bending segments 132 of the buckle frame component 13 can be an integrated structure. Preferably, components of the oil hydraulic press 100 on the left and on the right can work at the same time, and a telescopic force on the left is the same as that on right. The oil hydraulic press 100 is located at the center of the support frame 10, and the bending segments 132 at both ends are respectively located at the left and right pressure points. Due to the closed structure, the buckle frame component 13 is balance-loaded on the left and the right, so that requirement for the connection of the two buckle frame components 13 can be reduced.

In actual production, the support frame 10 needs to be stably installed, so the support frame 10 may further be provided with a support base 15 mounted on one of the buckle frame components 13. One end of the bending segment 132 forming the connecting surface is provided with a pin hole coupled to a pin. And the two buckle frame components 13 restrict the displacement along the long axis by the pin, which also helps the positioning. The bending segments 132 are connected to each other through the pin. Due to the force on the bending segment 132 is limited along a direction of the long axis, it only needs to ensure that the two buckle frame components 13 will not leave away the fixed position. The bending segments 132 are fixed by the pin, which simplifies the structure and is easy to assemble and convenient to operate. The connecting surface of the bending segment 132 also has a certain frictional force in the closed state, so that the requirement for connection component or mechanism (or design difficulty) is much lower (or much easier) than that in the transmission technology. The displacement of the two buckle frame components 13 along the short axis needs a certain limitation, which is ensured by the binding force. The support frame 10 is further provided with the binding layer 14. The support frame 10 is provided with a groove surround the surface of the outer ring, and the binding layer 14 is located in the groove and not higher than a depth of the groove. A width of a bottom surface of the groove can be the same as that of an opening of the groove. A width of the binding layer 14 can be the same as the width of the bottom surface of the groove. The support frame 10 is bound by the binding layer 14 on the outer ring. The pre-compression of the binding force can be set to an appropriate value according to the structural shape and material properties to ensure the structure is under an allowable pressure value in the preloading state and the tensile stress in the working state are within an allowable range. It is not necessary that the binding force must be greater than the nominal pressure of the oil hydraulic press as in the prior art to ensure that the column portion and the top beam are not separated in operation. Preferably, the binding layer 14 can be a bundled steel wire (or steel strip), the bottom surface of the groove is a non-smooth surface, both of which will increase the friction force, thereby ensuring the stability and structural rigidity of the winding structure, reducing the deformation of the support frame 10, and guarantee the stability of the support frame 10. Furthermore, the main segment 131 and the bending segment 132 of the support frame 10 can be hollow or partially hollow, which further reduces the use of materials on the basis of satisfying the requirements for connection and rigid support.

The following embodiment does not form part of the claimed invention, it adopts a bundling connection mechanism, and the pre-stress of the binding layer 14 on the support frame 10 can be set to any reasonable value according to design requirements. The pre-compression bundling force can be set to an appropriate value according to the structural shape and material characteristics, ensuring that the pre-compression bundling force of the skeleton structure is less than the maximum allowable pressure value in the preloading state, and that the tensile stress in the working state is within an allowable range. In the prior art, the binding force of the oil hydraulic press should be greater than the nominal pressure to ensure the column portion and the top beam not being separated in the working state, while it is not necessary in present disclosure.

The combination of the support frame 10 and the binding layer 14 in the present disclosure can balance the stress state of the material of the support frame 10 and the material of the binding material, showing that the material can simultaneously withstand the tension and compression. The number of components of the support frame is significantly less than that of components of the support frame in the prior art. On the basis of ensuring the mechanical properties of the structure, it can minimize the use and cost of the material and substantially increase the safety performance of the overall structure.

The following embodiment does not form part of the claimed invention. In this embodiment, since both the support frame 10 and the binding layer simultaneously bear the working load, even if one of them is completely broken or destroyed, the other one can still bear full of the working load. The binding structure can ensure the safety support of the frame structure to an extreme, which is reasonable, easy to implement, practical, and suitable for application.

The following embodiment does not form part of the claimed invention. In this embodiment an angle between the long axis of the support frame 10 and an average normal line of the connecting surface formed between the two buckle frame components 13 is in a range of 10 degrees to 90 degrees. The normal line is regarded as being perpendicular to a surface. The average normal line is regarded as the neutralization of the connecting surface. If the connecting surface is a circular arc, a smooth curved surface or a stepped surface, the average normal line is regarded as the neutralization value. The oil hydraulic press 100 can be extended and contracted in the direction of the long axis, and both ends of the support frame 10 in the long axis undergoes mainly the pulling force. Therefore, the joint of the two buckle frame components 13 are mainly subjected to a shearing force and not subjected to any force for separating along the short axis, it only needs to fix the two buckle frame components 13 along the long axis. In particular, when the upper and lower buckle frame components 13 are symmetrically shaped (or symmetrically deformed), there is no or almost no shearing force. Compared with the prior art, this structure is less stressed and the design is more reasonable under the condition of being subjected to the tension and compression.

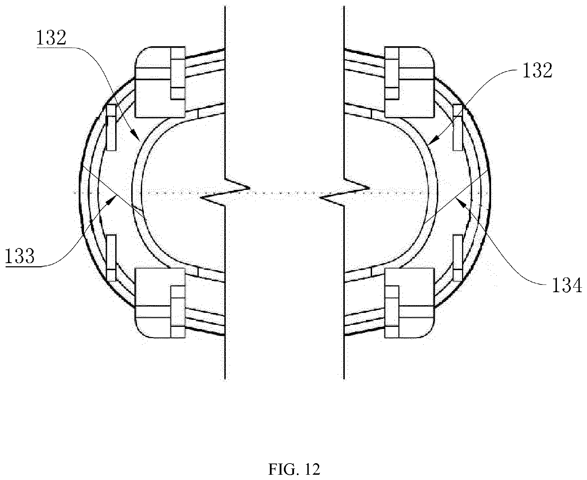

The following embodiments do not form part of the claimed invention Referring to FIG. 11 and FIG. 12, FIG. 11 shows a cross-sectional view showing connecting surface in an embodiment of the present disclosure, and FIG. 12 shows a cross-sectional view showing connecting surface in another embodiment of the present disclosure. Preferably, the connecting surface of the buckle frame components 13 is two planes, which are respectively defined as a first connecting surface 133 and a second connecting surface 134 parallel to each other (as shown in FIG. 10), or symmetrically arranged around the short axis (as shown in FIG. 11). Regardless of the arrangement, the forces along the long axis and the short axis of buckle frame components 13 are limited.

Therefore, the angle between the long axis of the support frame 10 and the average normal of the connection face is in the range of 10 degrees to 90 degrees. That is, the long axis is on the first connection plane 133 and the second connection plane 134, while the two buckle frame components 13 are substantially unstressed on the short axis.

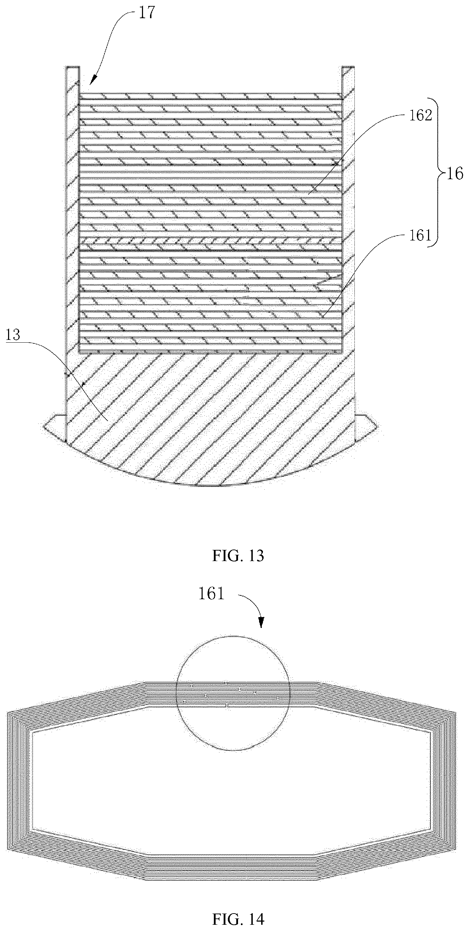

The following embodiment does not form part of the claimed invention. Referring to FIG. 13, FIG. 13 shows a cross-sectional view of a part of a support frame of an oil hydraulic press in a fourth embodiment of the present disclosure. To further improve the reliability and stability of the support frame 10, the support frame 10 is further provided with a transition layer 16, which is circumferentially wrapped around or located on the outer surface of the support frame 10. A circumferential outer surface of the transition layer 16 has a continuous smooth transition structure that protrudes outward from the support frame 10.

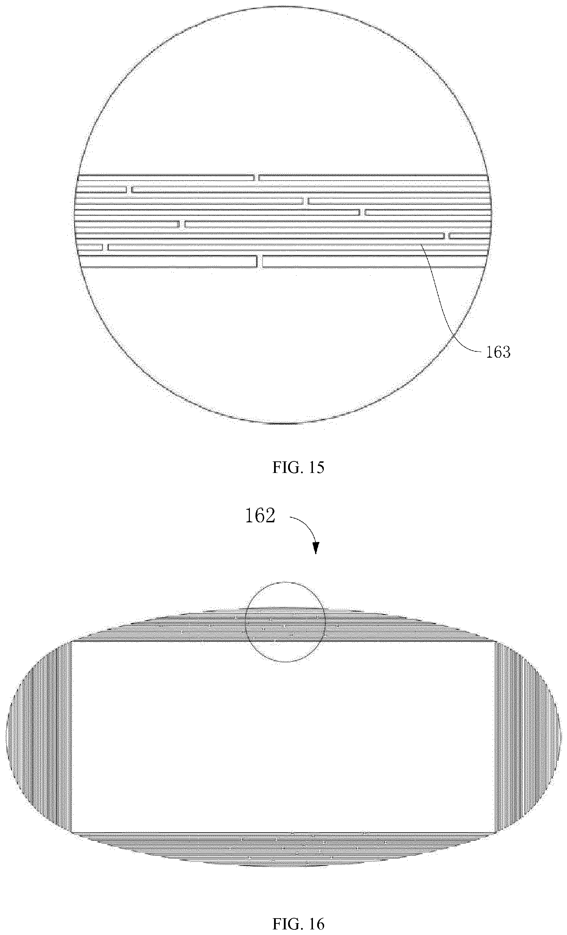

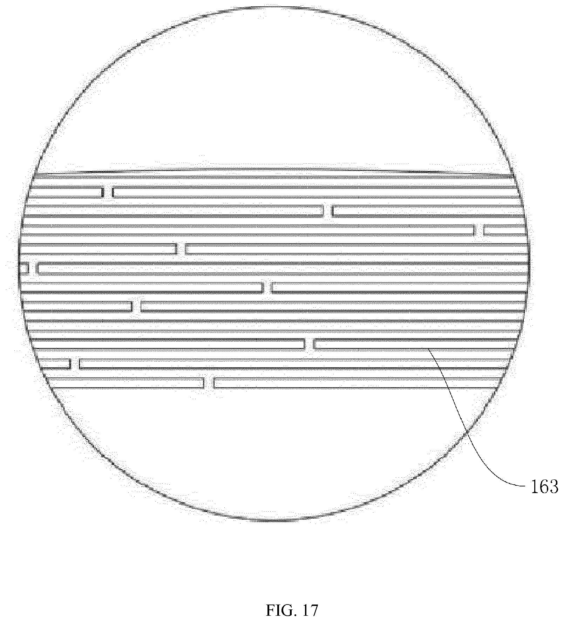

The following embodiment does not form part of the claimed invention. Referring to FIG. 14 to FIG. 17, FIG. 14 shows a cross-sectional view of a first transition layer in the present disclosure, FIG. 15 shows an enlarged view of a part of the first transition layer in FIG. 14, FIG. 16 shows a cross-sectional view of a second transition layer in the present disclosure, and FIG. 17 shows an enlarged view of a part of the second transition layer in FIG. 16. The transition layer 16 can serve as a covering structure for the support frame 10, and provide a supporting force for tighten the support frame 10 and a bundled frame for the bundled wire. The transition layer 16 at least includes a first transition layer 161 and a second transition layer 162. The first transition layer 161 is a ring-shaped layer and attached on the outer surface of the support frame 10. The second transition layer 162 is attached on the first transition layer 161. The function of the first transition layer 161 is to uniformly coat and tighten the support frame 10to provide support. The function of the second transition layer 162 is to optimize the outer wall of the transition layer to a continuous smooth transition shape, which improves binding strength of the transition layer to the support frame 10 and provides a better geometry for the bundled steel wire. After the bundled wire is wound, due to the smooth transition structure, the structure can meet the requirement of high strength support.

Preferably, the thickness of the first transition layer 161 can be uniform, and the thickness of the second transition layer 162 varies as a function, that is, the thickness of the second transition layer 162 is gradually varies along a circumferential direction. The first transition layer 161 having a uniform thickness can ensure uniform force in all directions around the support frame 10, and the thickness of the second transition layer 162 which changes in function can provide a continuous smooth transition outer wall. Of course, the relationship of the function can be optimized as a geometric formula. The second transition layer 162 can be a ring-shaped layer, and a longitudinal section of the outer wall of the second transition layer 162 satisfies a regular geometric formula, such as a geometric formula of a circle, an ellipse, an olive, or the like, that is, a longitudinal section of the outer wall of the second transition layer 162 is a regular geometry.

Preferably, the longitudinal section of the outer wall of the second transition layer 162 can be elliptical or olive-shaped, which has a long axis and a short axis and facilitates the structural components placing in the inner ring of the support frame 10. The elliptical or olive-like shape is beneficial to improve the stability of the structure and enhance mechanical property.

The transition layer 16 serves as a reinforced component of the support frame 10. The structure of the transition layer 16 is simplified, which is convenient for the production and processing of the present disclosure. The transition layer 16 can be composed of a plurality of supporting layers in staggered arrangement. That is, both the first transition layer 161 and the second transition layer 162 are composed of the plurality of supporting layers in staggered arrangement. The thickness of the plurality of supporting layers 163 is in a multiple ratio relationship. And the supporting layer 163 can be formed by a plurality of steel sheets having the same thickness and stitching end to end. The supporting layer 163 can be stacked into a desired shape by the plurality of steel sheets with different lengths. In a manner of staggered overlap, the plurality of supporting layers 163 can form the transition layer 16. The plurality of supporting layers 163 can be preferably in the same thickness, and the slits can be distributed to prevent gathering in a certain position or a small area, leading to the pressure reduced and the structural strength not large enough. At the same time, each of the supporting layers 163 is formed by splicing a plurality of steel plates end to end, so that the remaining material or waste in the production can be utilized. Due to the overlapping arrangement of the supporting layers 163, the strength of the support structure can be ensured and the materials are reduced. In addition, the steel plate of the supporting layer 163 can be spliced end to end in the different shapes, which can satisfy the requirement for the strength and reduce the limiting of the steel plate, for example, a plurality of steel plates of different sizes and shapes or cut-off regions can be used for the splicing.

The support frame 10 is provided with a groove 17 along the peripheral surface of the outer ring, and the transition layer 16 is disposed in the groove 17. The top surface of the transition layer 16 is not higher than a top edge of the groove 17. The width of the bottom surface of the groove 17 is equal to or smaller than the width of an opening of the groove 17. The width of the transition layer 16 is constant or consistent with the cross section of the groove 17. The groove 17 is disposed along the peripheral surface of the outer ring of the support frame 10, and the groove 17 is also closed. Here, side wall of the groove 17 may be protruded from the outer ring of the support frame 10a. The groove 17 is configured for limiting the transition layer 16 and the bundled steel wire, which facilitates the binding of the transition layer and the bundled steel wire on the support frame 10. The transition layer 16 is disposed on the bottom surface of the groove 17. The transition layer 16 can also be in a ring shape, so that the bottom surface of the groove 17 is coated with the transition layer 16. The transition layer 16 is wrapped by the bundled steel wire and bundled with the support frame 10 to form a support frame by the pre-stress. It should be noted that the thickness of the bundled steel wire cannot exceed the top edge of the groove 17, which can ensure a stable mechanical performance of support of the support frame, and also the beauty and practicality, and avoid the bundled steel wire projecting the groove 17 to affect placement and installation. Preferably, the width of the bottom surface of the groove 17 is the same as the width of the opening of the groove 17, the width of the transition layer 16 is the same as the width of the bottom surface of the groove 17, or the width of the transition layer 16 is slightly smaller than the width of the bottom surface of the groove 17, so that it is convenient to install the transition layer. After the installation of the transition layer 16, the bottom surface of the groove 17 can be tightly coated, and there is no gap between the transition layer 16 and the side wall of the groove 17, so that the bundled steel wire will not directly pressed on the bottom surface of the groove 17 when the bundled wire is wound. Of course, the thickness of the transition layer 16 may be uniform or unchanged. Alternatively, the transition layer 16 can be adapted to the cross section of the groove 17, and closely adhered to the bottom surface and the side surface of the groove 17. Of course, the support frame 10 may not be provided with the groove 17. After the support layer 10 is attached with the transition layer 16 and the bundled steel wire, plates can be provided on both sides of a layer structure of the support frame 10, the transition layer 16, and the bundled steel wire and fix the layer structure. It is beautiful and avoids the displacement of the transition layer 16 and the bundled steel wire.

The bundled steel wire is wound on the transition layer 16 in the present disclosure, the stability of the transition layer 16 and the support frame 10 can provide a support frame for the bundled steel wire, preventing only the support frame 10 as the support frame. Therefore, the support frame 10 cannot be an integral structure and formed by a plurality of steel castings in a splicing manner. The plurality of steel castings can be spliced and the transition layer 16 is bound on the plurality of steel castings, forming a stable support after winding the bundled steel wires. Since the support frame 10 mainly provides a support for the device in the inner ring, the structure of the support frame 10 can be simplified by the transition layer 16 and the bundled steel wire, the support frame 10 can be manufactured more simply, the production requirements and material cost can be reduced, and resources can be saved.

The transition layer 16 is coated to the bottom surface of the groove 17, which not only provides a winding support frame for the bundled steel wire, but also has a frictional force ensuring that the steel plate will not slide during subsequent use and the winding of the bundled steel wire is stable. The upper surface of the transition layer 16 is non-smooth, and a friction force of the upper surface of the steel sheet layer will provide a large friction force for the bundled steel wire to improve the structural stability of the support frame after winding. Preferably, the lower surface of the transition layer 16 in contact with the bottom surface of the groove 17 is provided with a ridge, and the bottom surface of the groove 17 is provided with another groove coupled to the ridge. When the steel plate is matched with the bottom surface of the groove 17, the transition layer 16 is not displaced around the outer periphery, and the ridge can provide a resistance, and the upper surface of the transition layer 16 may also be provided with such a structure for increasing the friction or binding the bundled steel wire, thereby ensuring the stability and structural rigidity of the frame structure and reducing the possibility of deformation of the support frame.

In the oil hydraulic press 100 provided by the present disclosure, the main cylinder assembly 20 and the fixed die table 30 can be fixed by the support frame 10, which forms a ring-like structure, can be operated in one, two or multiple sets in parallel and all can realize pressing manufacture. The oil hydraulic press 100 has less components, reduced material consumption and low manufacturing cost.

It will be readily understood by those skilled in the art that the above various preferred embodiments can be freely combined and superimposed without conflict.

## Claims

1. An oil hydraulic press (100) comprising a support frame (10), at least one main cylinder assembly (20) and at least two fixed die tables (30),

   the at least one main cylinder assembly (20) comprising a cylinder body (21) and two pistons (22) which are respectively disposed on two ends of the cylinder body (21) and mutually coaxial and move in opposite directions, the support frame (10) comprising two sets of end frames (11), the cylinder body (21) being located between the two sets of end frames (11),
   each of the two sets of end frames (11), the cylinder body (21) and each of the at least two fixed die tables (30) forming a closed structure, such that two closed structures are formed on both sides of the cylinder body (21), a pressing mechanism being formed between each of the two pistons (22) and each of the at least two fixed die tables (30),
   each of the two sets of end frames (11) comprising two first buckle frames (111), wherein the two first buckle frames (111) are symmetrically arranged around moving shafts of the two pistons (22),
   one end of each of the two first buckle frames (111) carrying the cylinder body (21), **characterized in that**,
   the other end of each of the two first buckle frames (111) carries uniting one of the at least two fixed die tables (30), and
   each of the two first buckle frames (111) comprises a main segment and a bending segment, the main segment and the bending segment are curved or curve-like, and the curvature of the main segment is smaller than that of the bending segment, one end of the main segment is connected with the cylinder body (21), and the other end of the main segment is connected with one end of the bending segment,
   the bending segments of the two first buckle frames (111) are interconnected and form a connection surface at the joint,
   the one end of the main segment connected to the cylinder body (21) is provided with a groove, and the corresponding cylinder body (21) is provided with a protrusion that cooperates with the groove,

ends of the two first buckle frames (111) forming the connection surface are provided with pin holes, which are coupled to pins.

2. The oil hydraulic press (100) of claim 1, wherein the oil hydraulic press (20) comprises a plurality of main cylinder assemblies (20), which are coaxially arranged in a line along telescopic directions of their pistons (22),

the support frame (10) further comprises at least one set of intermediate frames (12), and each of the at least one set of intermediate frames (12) comprises two second buckle frames (121), the two second buckle frames (121) are symmetrically arranged around the moving shafts of the pistons (22), and two ends of each of the two second buckle frames (121) are respectively connected to two adjacent cylinder bodies (21), the oil hydraulic press (100) further comprises a plurality of fixed die tables (30), and two of said plurality of fixed die tables (30) connecting with one of the at least one set of intermediate frames (12) are disposed opposite to each other and between two adjacent main cylinder assemblies (20), and the plurality of main cylinder assemblies (20) cooperate with the plurality of fixed die tables (30), respectively resulting in forming a plurality of pressing mechanisms which are mutually coaxial.

3. The oil hydraulic press (100) of claim 1, wherein the oil hydraulic press (100) comprises one main cylinder assembly (20),
the two fixed die tables (30) are respectively fixed on two sides of the main cylinder assembly (20) by the two sets of end frames (11), resulting in forming two pressing mechanisms which are mutually coaxial.

**Patentansprüche**

1. Öldruckpresse (100), umfassend einen Trägerrahmen (10), wenigstens eine Hauptzylinderbaugruppe (20) und wenigstens zwei Stammwerkzeugplatten (30),

wobei die wenigstens eine Hauptzylinderbaugruppe (20) einen Zylinderkörper (21) und zwei Kolben (22) umfasst, die an je einem von zwei Enden des Zylinderkörpers (21) angeordnet und zueinander koaxial sind und sich in entgegengesetzte Richtungen bewegen,
wobei der Trägerrahmen (10) zwei Sätze Endrahmen (11) umfasst, wobei der Zylinderkörper (21) zwischen den zwei Sätzen Endrahmen (11) angeordnet ist,
wobei jeder der zwei Sätze Endrahmen (11), der Zylinderkörper (21) und jede der wenigstens zwei Stammwerkzeugplatten (30) eine geschlossene Struktur bilden, derart, dass zwei geschlossene Strukturen, je eine auf jeder Seite des Zylinderkörpers (21), gebildet sind,
wobei ein Pressmechanismus zwischen jeden der zwei Kolben (22) und jeder der zwei Stammwerkzeugplatten (30) gebildet ist,
wobei jeder der zwei Sätze Endrahmen (11) zwei erste Klemmrahmen (111) umfasst, wobei die zwei ersten Klemmrahmen (111) symmetrisch um Bewegungsschäfte der zwei Kolben (22) herum angeordnet sind,
wobei ein Ende eines jeden der zwei ersten Klemmrahmen (111) den Zylinderkörper (21) trägt, **dadurch gekennzeichnet, dass**
das andere Ende eines jeden der zwei ersten Klemmrahmen (111) eine der wenigstens zwei Stammwerkzeugplatten (30) trägt und
jeder der zwei ersten Klemmrahmen (111) ein Hauptsegment und ein Biegesegment umfasst, wobei das Hauptsegment und das Biegesegment gekrümmt oder kurvenartig sind und die Krümmung des Hauptsegments geringer als die des Biegesegments ist, ein Ende des Hauptsegments mit dem Zylinderkörper (21) verbunden ist und das andere Ende des Hauptsegments mit einem Ende des Biegesegments verbunden ist,
wobei die Biegesegmente der zwei ersten Klemmrahmen (111) miteinander verbunden sind und eine Verbindungsfläche an der Verbindungsstelle bilden,
wobei das Ende des Hauptsegment, das mit dem Zylinderkörper (21) verbunden ist, mit einer Nut versehen ist und der entsprechende Zylinderkörper (21) mit einem Vorsprung versehen ist, der mit der Nut zusammenwirkt,
wobei Enden der zwei ersten Klemmrahmen (111), die die Verbindungsfläche bilden, mit Stiftlöchern versehen sind, die an Stifte gekoppelt sind.

2. Öldruckpresse (100) nach Anspruch 1, wobei die Öldruckpresse (20) eine Vielzahl von Hauptzylinderbaugruppen (20) umfasst, die koaxial in einer Linie entlang von Teleskopierungsrichtungen ihrer Kolben (22) angeordnet sind,

wobei der Trägerrahmen (10) ferner wenigstens einen Satz Zwischenrahmen (12) umfasst und jeder von dem wenigstens einen Satz Zwischenrahmen (12) zwei zweite Klemmrahmen (121) umfasst, wobei die zwei zweiten Klemmrahmen (121) symmetrisch um die Bewegungsschäfte der Kolben (22) angeordnet sind und die zwei Enden von jedem der zwei zweiten Klemmrahmen (121) jeweils mit zwei benachbarten Zylinderkörpern (21) verbunden sind,

wobei die Öldruckpresse (100) ferner eine Vielzahl von Stammwerkzeugplatten (30) umfasst und zwei der Vielzahl von Stammwerkzeugplatten (30), die mit wenigstens einem von dem wenigstens einen Satz Zwischenrahmen (12) verbunden sind, einander gegenüber und zwischen zwei benachbarten Hauptzylinderbaugruppen (20) angeordnet sind und die Vielzahl von Hauptzylinderbaugruppen (20) mit der Vielzahl von Stammwerkzeugplatten (30) zusammenwirkt, was zur Bildung einer Vielzahl jeweiliger Pressmechanismen führt, die zueinander koaxial sind.

3. Öldruckpresse (100) nach Anspruch 1, wobei die Öldruckpresse (100) eine Hauptzylinderbaugruppe (20) umfasst, die zwei Stammwerkzeugplatten (30) auf je einer der zwei Seiten der Hauptzylinderbaugruppe (20) durch die zwei Sätze Endrahmen (11) fixiert sind, was zur Bildung von zwei Pressmechanismen führt, die zueinander koaxial sind.

## Revendications

1. Une presse hydraulique à huile (100) comprenant un cadre de support (10), au moins un ensemble cylindre principal (20) et au moins deux plaques à matrice fixe (30),

le au moins un ensemble cylindre principal (20) comprenant un corps de cylindre (21) et deux pistons (22) respectivement agencés aux deux extrémités du corps de cylindre (21), mutuellement coaxiaux et se déplaçant dans des directions opposées,

le cadre de support (10) comprenant deux jeux de cadres d'extrémité (11), le corps de cylindre (21) étant situé entre deux jeux de cadres d'extrémité (11),

chacun des deux jeux de cadres d'extrémité (11), le corps de cylindre (21) et chacune des au moins deux plaques à matrice fixe (30) formant une structure fermée, de sorte que deux structures fermés sont formées sur les deux côtés du corps de cylindre (21),

un mécanisme de presse est formé entre chacun des deux pistons (22) et chacune des au moins deux plaques à matrice fixe (30),

chacun des deux jeux de cadres d'extrémité (11) comprend deux premiers cadres à boucle (111), dans lequel les deux premiers cadres à boucle (111) sont agencés symétriquement autour des tiges mobiles des deux pistons (22),

une extrémité de chacun des deux premiers cadres à boucle (111) portant le corps de cylindre (21), **caractérisée en ce que**,

les autres extrémités de chacun des deux premiers cadres à boucle (111) portent une des au moins deux plaques à matrice fixe (30), et

chacun des deux premiers cadres à boucle (111) comprend un segment principal et un segment de flexion, le segment principal et le segment de flexion étant courbes ou en forme de courbe, et la courbure du segment principal est plus petite que celle du segment de flexion, une extrémité du segment principal est connectée au corps de cylindre (21), et l'autre extrémité du segment principal est connectée à une extrémité du segment de flexion,

les segments de flexion des deux premiers cadres à boucle (111) sont interconnectées et forment une surface de connexion à la jointure,

l'extrémité du segment principal connectée au corps de cylindre (21) est munie d'une gorge, et le corps de cylindre correspondant (21) est muni d'une saillie qui coopère avec la gorge,

les extrémités des deux premiers cadres à boucle (111) formant la surface de connexion sont munies de trous de broche, qui sont couplées à des broches.

2. La presse hydraulique à huile (100) selon la revendication 1, dans laquelle presse hydraulique à huile (20) comprend une pluralité d'ensembles cylindres principaux (20), qui sont agencés de façon coaxiale en une ligne dans le sens télescopique de leurs pistons (22),

le cadre de support (10) comprend en outre au moins un jeu de cadres intermédiaires (12), et chacun des au moins un jeu de cadres intermédiaires (12) comprend deux deuxièmes cadres à boucle (121), les deux deuxièmes cadres à boucle (121) sont agencés symétriquement autour des tiges mobiles des pistons (22), et deux extrémités de chacun des deux deuxièmes cadres à boucle (121) sont respectivement connectées aux deux corps de cylindre (21) adjacents,
la presse hydraulique à huile (100) comprend en outre une pluralité de plaques à matrice fixe (30), et deux de ladite pluralité de plaques à matrice fixe (30) connectées à un des au moins un jeu de cadres intermédiaires (12) sont agencées de façon mutuellement opposée et entre deux ensembles cylindres principaux (20), et la pluralité d'ensembles cylindres principaux (20) coopère avec la pluralité de plaques à matrice fixe (30), résultant respectivement en la formation d'une pluralité de mécanismes de presse qui sont mutuellement coaxiaux.

3. La presse hydraulique à huile (100) selon la revendication 1, dans laquelle la presse hydraulique à huile (100) comprend un ensemble cylindre principal (20),
les deux plaques à matrice fixe (30) sont respectivement fixées sur deux côtés de l'ensemble cylindre principal (20) par deux jeux de cadres d'extrémité (11), résultant en la formation de deux mécanismes de presse qui sont mutuellement coaxiaux.

FIG. 1

FIG. 2

FIG. 3

FIG. 4

FIG. 5

FIG. 6

FIG. 7

FIG. 8

FIG. 9

FIG.10

FIG. 11

FIG. 12

FIG. 13

FIG. 14

163

FIG. 15

162

FIG. 16

FIG. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2018108279 W
- CN 201810005642
- CN 201810221695
- CN 201810221701
- CN 201810221706
- CN 201820007399X
- CN 201820363924
- CN 201820363934

- CN 201820363937
- JP S56175199 U
- DE 102010031100 A1
- US 20040065137 A1
- DE 19747658 A1
- JP 2001107911 A
- DE 102005048648 B3